# EUROPÄISCHE PATENTSCHRIFT

(11) **EP 2 238 001 B1**
(45) Veröffentlichungstag und Bekanntmachung des Hinweises auf die Patenterteilung: **18.03.2015**
(21) Anmeldenummer: 09707092.4
(22) Anmeldetag: 08.01.2009
(51) Int. Cl.: B60T 8/36, B60T 8/48, G05D 16/20

(54) **VERFAHREN ZUR KONDITIONIERUNG EINES REGELVENTILS**
METHOD FOR CONDITIONING A CONTROL VALVE
PROCÉDÉ DE CONDITIONNEMENT D'UNE SOUPAPE DE RÉGULATION

(30) Priorität: 30.01.2008 DE 102008006653
(43) Veröffentlichungstag der Anmeldung: 13.10.2010
(73) Patentinhaber: Continental Teves AG & Co. OHG, 60488 Frankfurt (DE)
(72) Erfinder: GRONAU, Ralph, 35083 Wetter (DE); NEU, Andreas, 76773 Kuhardt (DE); KOLLMANN, Holger, 63533 Mainhausen (DE); BURKHARD, Dieter, 55411 Bingen-Büdesheim (DE); LESKA, Peter, 63303 Dreieich (DE); BERNTHEUSEL, Jörg, 61267 Neu-Anspach (DE); FRANKE, Tobias, 65719 Hofheim (DE); WAGNER, Michael, 64289 Darmstadt (DE); MURATOSKI, Jusuf, 63165 Mühlheim (DE); KOST, Artur, 65812 Bad Soden (DE)
(86) Internationale Anmeldenummer: PCT/EP2009/050178
(87) Internationale Veröffentlichungsnummer: WO 2009/095287

(56) Entgegenhaltungen:
- EP-A2- 0 137 324
- DE-A1- 19 848 960
- DE-A1-102007 019 732
- FR-A- 2 545 628
- US-A1- 2007 215 206
- US-B1- 6 170 506

## Beschreibung

Die Erfindung betrifft ein Regelventilkonditionierverfahren in einem elektrohydraulischen Druckregelaggregat mit mindestens einem elektrisch angesteuerten analog geregelten Solenoidentil, dass während einer Druckregelung mit einem bestimmten Arbeitsstrom betrieben wird, welcher im Druckregelbereich der Anwendung des Ventils liegt.

Aus der DE 103 41 027 A1 ist ein Verfahren zur Kraftfahrzeuglängsregelung (ACC) bekannt, welches in bzw. mit einem verbreitet eingesetzten zweikreisigen ABS/ESP-Bremsensteuergerät mit Pumpe durchführbar ist. Zur Dosierung des hydraulischen Bremsdrucks wird ein analog regelndes, elektrisch ansteuerbares hydraulisches Trennventil eingesetzt, wobei dieses im Gegensatz zu einer Regelung mit einem analog angesteuerten Einlassventil eine bremskreisübergreifende Druckregelung zulässt. Die zur Druckregelung eingesetzten Hydraulikventile sind in der Regel sogenannte Analog/Digital-Ventile (A/D-Ventile), welche im wesentlichen herkömmlichen elektromagnetischen (Solenoid-) Schaltventilen entsprechen, wobei diese jedoch mittels eines pulsweitenmodulierten Stroms (PWM) in der Weise angesteuert werden, dass der Ventilstößel eine Schwimmstellung einnimmt. Auf diese Weise ist eine Druckregelung/-steuerung möglich, sofern die Stromansteuerung hinreichend genau und reproduzierbar durchgeführt wird. Dies ist in der Regel dann ohne größere Probleme möglich, wenn der einzuregelnde Druck über einen Drucksensor in Verbindung mit einer Regelschleife eingeregelt werden kann. Erheblich schwieriger ist es, ein entsprechendes Analogregelverfahren ohne einen Drucksensor im zu regelnden Druckkreis vorzunehmen. In diesem Fall wird häufig auf gespeicherte Ventilkennlinien zurückgegriffen, welche in Verbindung mit an sich bekannten Regelverfahren eine Druckeinstellung im Rad ohne zusätzliche Raddrucksensoren erlauben.

Die vorstehend erwähnte Ventilkennlinie erlaubt also eine Druckeinstellung durch das Ventil nach Maßgabe einer dem Regler als Eingangsgröße vorliegenden Druckanforderung. In diesem Zusammenhang wurde in der DE 103 41 027 A1 das Problem erwähnt, dass der Totraum der Hydraulik, wie zum Beispiel das Lüftspiel zwischen Bremsbelag und Bremsscheibe, zu einer nicht komfortablen Regelung im Längsregelungsbetrieb führen kann. Als Lösung für dieses Problem wird vorgeschlagen, die Kalibrierkennlinie mit einem Offset zu beaufschlagen.

Aus der DE 10 2004 008 796 A1 geht ein Verfahren und eine Vorrichtung zur Steuerung eines Hydraulikventils eines hydraulischen Systems hervor, bei dem zur Geräuschdämpfung an einem durch eine Bremsenregelung angesteuerten Solenoidventil eine Gegenkraft erzeugt wird, in dem die Ventilspule mit einer elektrischen Anregung mit einer geeigneten Frequenz überlagert wird. Das Verfahren bezieht sich auf Druckregelverfahren, bei denen der Druckaufbau und Druckabbau mittels entsprechend einer Pulsfolge geschalteter Ventile erfolgt.

In der DE 10 2007 019 732 A1 ist ein Verfahren zur Kalibrierung der Druck-/Öffnungsstromcharakteristik eines analogisierten oder analog angesteuerten hydraulischen Trennventils eines geregelten Bremssystems beschrieben. Um ein sicheres Schließen des Trennventils zu erreichen, wird ein Schließpuls angelegt. Anschließend wird der dem Trennventil zugeführte Ventilstrom auf null reduziert und das Öffnen des zu kalibrierenden Trennventils durch eine mit Hilfe der Raddrehzahlsensoren ermittelten Änderung der Verzögerung des Kraftfahrzeugs ermittelt.

Aus der DE 198 48 960 A1 ist ein Verfahren und eine Vorrichtung zur Steuerung eines Drucksteuerventils in einer Bremsanlage bekannt, bei welchen beim Übergang von einer die Druckdifferenz über dem Ventil erhöhenden Ansteuerung zu einer druckdifferenzreduzierenden Ansteuerung die Ansteuersignalgröße für das Drucksteuerventil mittels einer vorgegebenen Größe korrigiert wird.

Die US 6,170,506 B1 offenbart ein Verfahren zum Reinigen eines spulenbetriebenen Regelventils, bei dem ein an eine Spule angelegter Steuerstrom eine definierte Reaktion des Ventils erzeugt. In Abhängigkeit von der Kontamination der Umgebung des Regelventils werden Reinigungspulse definierter Pulsbreite, Amplitude und Polarität an die Spule angelegt.

In der EP 0 137 324 A2 sind ein Verfahren und eine Vorrichtung zur Umwandlung einer elektrischen in eine dazu proportionale mechanische Stellgröße unter Verwendung eines elektromagnetischen Stellglieds beschrieben. Auf verschiedenen Wegen wird eine große Genauigkeit bei der Einstellung der mechanischen Stellgröße erreicht.

Die Erfindung setzt sich zum Ziel, den Komfort und die Regelungsgenauigkeit eines Druckregelaggregats zu verbessern.

Diese Aufgabe wird erfindungsgemäß gelöst durch das Verfahren gemäß Anspruch 1.

Die Erfindung betrifft ein Regelventilkonditionierverfahren in einem elektrohydraulischen Druckregelaggregat mit mindestens einem elektrisch angesteuerten analog geregelten Solenoidventil. Das Regelventil wird während einer Druckregelung mit einem bestimmten Arbeitsstrom nach Maßgabe eines im Druckregelaggregat gespeicherten funktionalen Zusammenhangs oder Kennfeld zwischen Ventilstrom und Differenzdruckkennlinie betrieben. Das Verfahren umfasst folgende Schritte:
a) Kurzzeitige Beaufschlagung des Solenoidventils mit zumindest einem Antihysteresepuls, während dem ein Strom entweder weit unterhalb des Arbeitsstroms oder weit oberhalb des Arbeitsstroms in dem Ventil eingestellt wird, wobei
b) der Antihysteresepuls vor oder während dem Regelbetrieb mit dem gewünschten Arbeitsstrom erfolgt, insbesondere vor jedem Druckaufbau- und/oder Druckabbau, und wobei
c) der Antihysteresepuls so kurz bemessen ist, dass der Bremsdruck durch diesen weitestgehend unbeeinflusst bleibt.

Vorzugsweise weist der Antihysteresepuls eine Länge von höchstens 100 ms, insbesondere höchstens 50 ms auf.

Der Strom während des Antihysteresepulses ist dabei mindestens 50 %, insbesondere mindestens 80 %, höher oder niedriger als der Arbeitsstrom.

Wie weiter unten noch näher erläutert wird, hat sich gezeigt, dass bei der Einstellung eines gewünschten Drucks über den am Regelventil angelegten Spulenstrom ein Hystereseeffekt vorhanden ist. Wertet man zum Beispiel im Labor unter geeigneten Bedingungen die Ventilkennlinie aus, so zeigt sich ein Hysteresebereich, welcher von einer oberen und unteren Strom-Druck-Randkurve begrenzt wird. Zweckmäßigerweise wird in der Elektronik des Druckregelaggregats die ermittelte obere Strom-Druck-Randkurve des Hysteresebereichs und/oder die untere Randkurve des Hysteresebereichs gespeichert.

Bei dem analog angesteuerten Solenoidventil handelt es sich erfindungsgemäß um ein Bremsdruckregelventil in einer elektrohydraulischen Bremsdruckregelvorrichtung, insbesondere um ein um ein stromlos offenes Ventil, welches ganz besonders bevorzugt als Trennventil eingesetzt wird. Das Ventil wird so angesteuert, dass ein Regelbetrieb möglich ist. Bevorzugt wird das Solenoid-Regelventil mit einem pulsweitenmodulierten Stromregler angesteuert. Als Analogventil im Bereich der elektronischen Bremssysteme werden vorzugsweise sogenannte analogisierte Schaltventile eingesetzt.

Bei der Bremsdruckregelung, die von dem Drucksteueraggregat durchgeführt wird, handelt es sich erfindungsgemäß um eine Kraftfahrzeug-Abstandsregelung.

Das zur Regelung eingesetzte Druckregelaggregat weist bevorzugt keine Drucksensoren für die Messung des geregelten Hydraulikdrucks auf.

Der Antihysteresepuls wird erfindungsgemäß zumindest kurz vor einer Änderung des einzuregelnden Differenzdrucks und/oder einer Änderung des einzuregelnden Stroms durchgeführt, um eine definierte Position auf einer gespeicherten Ventilkennlinie auswählen zu können.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: eine Prinzipdarstellung der Druckschnittstelle einer Druckregelvorrichtung,
- Fig. 2: eine schematische Darstellung einer Bremsvorrichtung für ABS-, ASR-, ESP- und zusätzliche Regelungsvorgänge, wie ACC etc. und
- Fig. 3: ein Diagramm mit dem Spulenstrom für das Trennventil in Abhängigkeit von der Druckanforderung.

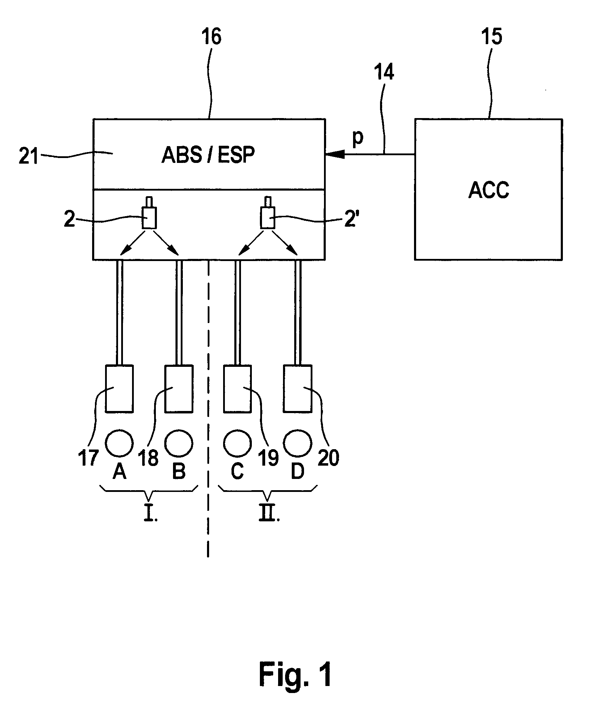

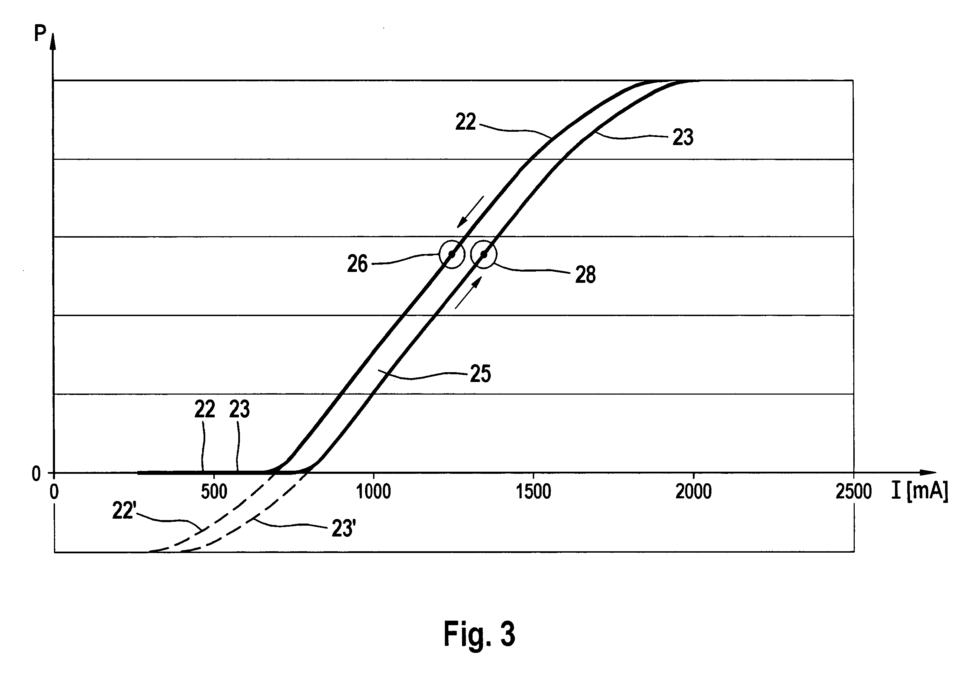

In der schematischen Darstellung in Fig. 1 ist ein externer ACC-Regler 15 zur Abstandsregelung über eine Druckschnittstelle (symbolisiert durch Leitung 14) mit ABS/ESP-Regler 16 verbunden. Die ACC-Funktion kann alternativ auch innerhalb des Reglers 16 verwirklicht sein, wenn dieser die für ACC notwendigen Sensorsignale über gesonderte Eingänge zur Verfügung gestellt bekommt, so dass diese verfügbar sind. Längsregler 15 gibt über Leitung 14 ein Druckanforderungssignal an Regler 16 weiter. Das darin enthaltene Regelprogramm 21 setzt die Druckanforderung in Ventilansteuerungssignale um, so dass der Druck in den Radbremsaktuatoren 17 bis 20 in geeigneter Weise eingestellt wird. Im ACC-Regelbetrieb erfolgt ein Druckaufbau in der Regel aktiv, das heißt eine Pumpe (Bezugszeichen 1, 1' in Fig. 3) fördert Druckmittel gegen die den Einlassventilen zugewandten Seite von Trennventil 2 bzw. 2'. Dabei wird das Trennventil mit einem geeigneten Strom durch einen elektrischen Stromregler (PWM) bestromt. Ein dosiertes Druckbefüllen der Radbremskreise I. und II. kann so erfolgen, wobei Trennventil 2 zur Regelung des Drucks in Kreis I. und Trennventil 2' zur Regelung des Drucks in Kreis II. eingesetzt wird.

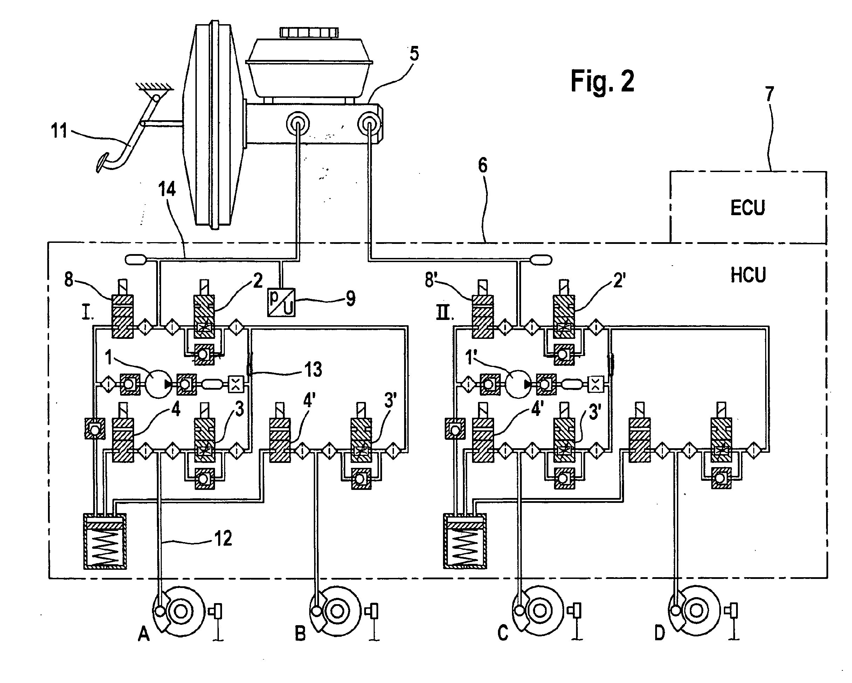

An Hand von Fig. 2 wird nachfolgend der Aufbau eines beispielgemäßen Druckregelaggregats für elektronische Bremssysteme beschrieben. Vom Fahrer wird über Tandemhauptzylinder 5 Bremsdruck aufgebaut. Tandemhauptzylinder 5 ist mit Hydraulikeinheit 6 (HCU) eines elektronischen Kraftfahrzeugbremssystems verbunden. Elektronikeinheit 7 (ECU) umfasst ein Mikroprozessorsystem, mit dem die im Ventilblock enthaltenen Aktuatoren und Sensoren elektronisch gesteuert bzw. ausgemessen werden können. Hydraulikeinheit 6 umfasst zwei Bremskreise I und II. Ferner umfasst jeder der Bremskreise je zwei Raddruckkreise (A, B bzw. C, D) mit jeweils einem Einlass- 3 bzw. 3' und einem Auslassventil 4 bzw. 4'. Die Elektronik der ECU 7 umfasst einen mehrkanaligen Stromregler, welcher eine unabhängige Regelung der Ströme durch die Spulen der stromlos offenen Trennventile 2, 2' und der stromlos offenen Einlassventile 3, 3' erlaubt. Bezugszeichen 8 bzw. 8' bezeichnen stromlos geschlossene elektronische Umschaltventile. In der zu Hauptzylinder 5 führenden Hydraulikleitung 14 befindet sich ein Eingangsdrucksensor 9. Das dargestellte Bremssystem umfasst in den Raddruckkreisen selbst keine weiteren Drucksensoren. Prinzipiell können dort aber auch zusätzliche Raddrucksensoren angeordnet werden, was jedoch auf Grund der Kosten häufig nicht der Fall ist. Pumpe 1 bzw. 1' ist zum selbstständigen Druckaufbau während einer Längs(ACC)-Regelung und bei Fahrdynamikregelungen (ESP) verwendbar, aber auch bei ASR-Regelungen und der normalen Rückförderung von Druckmittel bei Druckabbauvorgängen. Wenn Pumpe 1 angeschaltet ist, fördert diese Druckvolumen in Richtung von Leitung 13 gegen Trennventil 2 und Einlassventil 3. Bei geöffnetem Einlassventil 3 kann mit Trennventil 2 im Regelbetrieb der Druck in der Radbremse zum Beispiel während der Längsregelung dosiert werden. Dabei ist das elektronische Umschaltventil 8 in der hier beschriebenen Situation vollständig geöffnet.

Die Kurven 22 (obere Strom-Druck-Randkurve) und 23 (untere Strom-Druck-Randkurve) in Fig. 3 stellen den im Labor gemessenen Zusammenhang zwischen dem Spulenstrom I für das Trennventil 2 bzw. 2' und dem am Ventil anliegenden Differenzdruck P dar, wenn die Kurven vollständig von Strom 0 beginnend ansteigend oder vom Maximalstrom beginnend fallend vollständig durchlaufen werden. Im Sinne der vorliegenden Patentanmeldung wird unter Maximalstrom der Strom verstanden, bei dem die Kurven 22 und 23 in Richtung steigender Ströme im wesentlichen vollständig zusammenfallen (Sättigungsstrom). Zumindest Kurve 23 ist in einem Festwertspeicher der Elektronik des Druckregelaggregats abgelegt. Auf Grund der physikalischen Ventileigenschaften, wie mechanische und magnetische Hysteresen, hängt der Kurvenverlauf P(I) von der Vorgeschichte ab. Ähnlich der Magnetisierungskurve eines Permanentmagneten stellt die Kurve 22 den Druckverlauf dar, wenn vom maximal möglichen Ventilstrom ausgehend der Druck auf einen Strom von 0 A abgesenkt wird. Kurve 22 bzw. 23 kann im Falle des Trennventils auch als sogenannte Öffnungsstromkennlinie bezeichnet werden. Ausgehend von einem Strom von 0 A ergibt sich bei ansteigendem Strom die leicht unterhalb, bei etwas niedrigeren Drücken liegende Kurve 23. Die Kurven 22 und 23 definieren den Rand des Hysteresebereichs 25. Im Strombereich unterhalb etwa 700 mA fallen Kurve 22 und Kurve 23 zusammen. In Fig. 2 sind im Strombereich unterhalb 700 mA noch die Kurvenverläufe 22' und 23' eingezeichnet. Je nach vorhandenem Ventiltyp kann das Zusammenfallen der Kurven auch unterhalb von 700 mA auftreten. Die Kurvenverläufe 22' und 23' entsprechen der mathematischen Fortsetzung der Hysteresekurve, wobei diese physikalisch auf Grund nicht vorhandener negativer Druckwerte keine technische Bedeutung haben. Auf Grund der Hysterese im Kurvenverlauf der Druck-/Stromkennlinie des Ventils kann bei einer durch das Druckregelaggregat vorgenommenen Ventilregelung ohne Drucksensor, welche einen bestimmten Differenzdruck nach Maßgabe einer Kennlinie (zum Beispiel Öffnungsstromkennlinie) über den Ventilstrom einstellt, kein eindeutiger Zusammenhang zwischen Druck und Strom hergestellt werden. So kann es zum Beispiel sein, dass bei einer nicht eindeutigen Vorgeschichte, zum Beispiel wenn in Punkt 26 eine Stromumkehr erfolgt, der Kurvenverlauf des Druck-Strom Zusammenhangs in einem nicht weiter definierten Bereich zwischen den Kurven 22 und 23 liegt. Auf Grund der nicht eindeutigen Kennlinie ist der tatsächlich eingestellte Differenzdruck nicht eindeutig vorhersagbar, wodurch sich im Regelungsbetrieb bzw. bei der Druckeinstellung Ungenauigkeiten ergeben, die mit dem Verfahren gemäß der Erfindung vermieden werden können.

Gemäß einem Beispiel zur Durchführung des Verfahrens nach der Erfindung wird vor dem Einstellen eines gewünschten Differenzdrucks (zum Beispiel Punkt 28 auf Kurve 23) der Strom durch die Ventilspule für eine Dauer von ca. 0,2 bis 100 ms, insbesondere 1 bis 10 ms, auf Null reduziert (Antihysteresepuls). Negative Stromwerte für einen Antihysteresepuls wären ebenfalls denkbar, können aber mit den eingesetzten Stromreglern in der Regel nicht realisiert werden. Danach wird der Strom sofort auf den Punkt 28 zugeordneten Stromwert für die eigentliche Regelung erhöht. Prinzipiell kann auch durch Erzeugen eines kurzen Strompulses entsprechender Dauer auf einen Maximalstrom von 2000 mA der Punkt 26 auf Kurve 22 eingenommen werden. Durch die Beaufschlagung des Ventils mit einem Hysteresepuls wird sichergestellt, dass die Kennlinie der dem Regelaggregat, zum Beispiel im Speicher abgelegten, bekannten Kurve 23 entspricht. Dies führt im praktischen Betrieb zu einer erheblichen Verbesserung der Regelgenauigkeit. Gemäß dem ersten Ausführungsbeispiel ist Kurve 23 im Bremsenaggregat gespeichert sein. Zusätzlich oder alternativ kann auch Kurve 22 im Regler hinterlegt sein.

## Patentansprüche

1. Regelventilkonditionierverfahren in einem elektrohydraulischen Druckregelaggregat mit mindestens einem elektrisch angesteuerten analog geregelten Solenoidventil, welches ein Bremsdruckregelventil in einer elektrohydraulischen Bremsdruckregelvorrichtung (16) ist, und das während einer Bremsdruckregelung mit einem bestimmten Arbeitsstrom nach Maßgabe eines im Druckregelaggregat gespeicherten funktionalen Zusammenhangs oder Kennfeld zwischen Ventilstrom und Differenzdruckkennlinie betrieben wird, mit den Schritten:
a) Kurzzeitige Beaufschlagung des Solenoidventils mit zumindest einem Antihysteresepuls, während dem ein Strom entweder weit unterhalb des Arbeitsstroms oder weit oberhalb des Arbeitsstroms in dem Ventil eingestellt wird, wobei
b) der Antihysteresepuls vor oder während dem Regelbetrieb mit dem gewünschten Arbeitsstrom erfolgt, insbesondere vor jedem Druckaufbau- und/oder Druckabbau, und wobei
c) der Antihysteresepuls so kurz bemessen ist, dass der Bremsdruck durch diesen weitestgehend unbeeinflusst bleibt, wobei
d) der Antihysteresepuls zumindest kurz vor einer Änderung des einzuregelnden Differenzdrucks und/oder einer Änderung des einzuregelnden Stroms durchgeführt wird, und wobei die Bremsdruckregelung eine Kraftfahrzeug-Abstandsregelung ist.

2. Verfahren nach Anspruch 1, **dadurch gekennzeichnet, dass** der Antihysteresepuls eine Länge von höchstens 100 ms, insbesondere höchstens 50 ms aufweist.

3. Verfahren nach Anspruch 1 oder 2, **dadurch gekennzeichnet, dass** der Strom während des Antihysteresepulses mindestens 50 %, insbesondere mindestens 80 %, höher oder niedriger als der Arbeitsstrom ist.

4. Verfahren nach Anspruch einem der Ansprüche 1 bis 3, **dadurch gekennzeichnet, dass** das Solenoidventil ein stromlos offenes Ventil ist, welches insbesondere als Trennventil eingesetzt wird.

5. Verfahren nach mindestens einem der Ansprüche 1 bis 4,
**dadurch gekennzeichnet, dass** das Solenoid-Regelventil mit einem pulsweitenmodulierten Stromregler angesteuert wird.

6. Verfahren nach mindestens einem der Ansprüche 1 bis 5,
**dadurch gekennzeichnet, dass** das zur Regelung eingesetzte Druckregelaggregat keine Drucksensoren für die Messung des geregelten Hydraulikdrucks aufweist.

## Claims

1. Control valve conditioning method in an electrohydraulic pressure control unit having at least one electrically actuated solenoid valve which is controlled in an analog manner, is a brake pressure control valve in an electrohydraulic brake pressure control apparatus (16), and is operated at a specific operating current in accordance with a functional relationship or characteristic map between the valve current and the differential pressure characteristic curve, said functional relationship or characteristic map being stored in the pressure control unit, during a brake pressure control operation, said method comprising the steps of:
a) brief application of at least one antihysteresis pulse to the solenoid valve, during which antihysteresis pulse a current is set either far below the operating current or far above the operating current in the valve, with
b) the antihysteresis pulse being applied at the desired operating current before or during the control operation, in particular before each increase in pressure and/or reduction in pressure, and with
c) the antihysteresis pulse being so short that the brake pressure remains largely unaffected by said antihysteresis pulse, with
d) the antihysteresis pulse being applied at least shortly before a change in the differential pressure to be adjusted and/or a change in the current to be adjusted, and with the brake pressure control operation being a motor vehicle distance control operation.

2. Method according to Claim 1, **characterized in that** the antihysteresis pulse has a length of at most 100 ms, in particular at most 50 ms.

3. Method according to Claim 1 or 2, **characterized in that** the current is at least 50%, in particular at least 80%, higher or lower than the operating current during the antihysteresis pulse.

4. Method according to one of Claims 1 to 3, **characterized in that** the solenoid valve is a valve which is open when no current is applied and is used, in particular, as an isolating valve.

5. Method according to at least one of Claims 1 to 4, **characterized in that** the solenoid control valve is actuated by a pulse-width-modulated current controller.

6. Method according to at least one of Claims 1 to 5, **characterized in that** the pressure control unit which is used for control purposes does not have any pressure sensors for measuring the controlled hydraulic pressure.

## Revendications

1. Procédé de conditionnement d'une soupape de régulation dans une unité de régulation de pression électrohydraulique comprenant au moins une électrovanne à commande électrique et régulation analogique, qui est une soupape de régulation de la pression de freinage dans un dispositif de régulation de la pression de freinage électrohydraulique (16), et qui, pendant une régulation de la pression de freinage, est commandée avec un certain courant de travail en fonction d'une relation fonctionnelle ou d'un champ caractéristique stocké(e) dans l'unité de régulation de pression entre le courant de soupape et la caractéristique de pression différentielle, comprenant les étapes suivantes :
a) courte sollicitation de l'électrovanne avec au moins une impulsion anti-hystérésis, durant laquelle un courant est ajusté soit largement en dessous du courant de travail soit largement au-dessus du courant de travail dans la soupape,
b) l'impulsion anti-hystérésis s'effectuant avant ou pendant l'opération de régulation avec le courant de travail souhaité, en particulier avant chaque augmentation et/ou diminution de pression, et
c) l'impulsion anti-hystérésis étant dimensionnée de manière suffisamment courte pour que la pression de freinage reste largement non influencée par celle-ci,
d) l'impulsion anti-hystérésis étant réalisée au moins juste avant une modification de la pression différentielle à réguler et/ou une modification du courant à réguler, et la régulation de la pression de freinage étant une régulation de distance d'un véhicule automobile.

2. Procédé selon la revendication 1, **caractérisé en ce que** l'impulsion anti-hystérésis présente une durée de 100 ms au maximum, en particulier de 50 ms au maximum.

3. Procédé selon la revendication 1 ou 2, **caractérisé en ce que** le courant pendant l'impulsion anti-hystérésis est supérieur ou inférieur au courant de travail d'au moins 50 %, en particulier d'au moins 80 %.

4. Procédé selon l'une quelconque des revendications 1 à 3, **caractérisé en ce que** l'électrovanne est une soupape ouverte en l'absence de courant, qui est utilisée notamment en tant que soupape de coupure.

5. Procédé selon au moins l'une quelconque des revendications 1 à 4, **caractérisé en ce que** l'électrovanne de régulation est commandée avec un régulateur de courant à modulation de largeur d'impulsion.

6. Procédé selon au moins l'une quelconque des revendications 1 à 5, **caractérisé en ce que** l'unité de régulation de pression utilisée pour la régulation ne présente aucun capteur de pression pour la mesure de la pression hydraulique régulée.
